# EUROPÄISCHE PATENTANMELDUNG

(11) **EP 3 546 048 A1**
(43) Veröffentlichungstag der Anmeldung: **02.10.2019**
(21) Anmeldenummer: 19174763.3
(22) Anmeldetag: 14.06.2012
(51) Int. Cl.: B01D 46/00, B01D 46/24, B01D 46/10

(54) **LUFTFILTERSYSTEM, LUFTFILTERELEMENT UND VERFAHREN ZUM AUSTAUSCH EINES LUFTFILTERELEMENTS**

(30) Priorität: 15.06.2011 DE 102011106502
(62) Teilanmeldung aus: 12728243.2
(71) Anmelder: Mann+Hummel GmbH, 71636 Ludwigsburg (DE)
(72) Erfinder: Kaufmann, Michael, 67149 Meckenheim (DE); Ruhland, Klaus-Dieter, 67149 Meckenheim (DE)
(74) Vertreter: Seyboth, Matthias

(57) **Zusammenfassung**

Es ist ein Filter (1) zur Filterung von Luft, insbesondere ein Luftfilterelement (30), zum lösbaren Einbau in ein Gehäuse (10), das ein Gehäuseoberteil (11) und insbesondere ein an dem Gehäuseoberteil (11) befestigtes Mittelrohr (20) aufweist, sowie das Gehäuse für das Filterelement (30) bereitgestellt. Das Filterelement hat eine Dichtung (33, 34) zum Halten des Filterelements (1) an dem Gehäuseoberteil (11) und dem Mittelrohr (20) sowie zum Abdichten des Raums (111) zwischen Filterelement (30) und Gehäuseoberteil (11), wenn das Filterelement (30) in dem Gehäuse (10) lösbar eingebaut ist. Die Dichtung (33, 34) ist dabei mit einer Dichtungsaufnahme (111) des Gehäuseoberteils (11) und/oder des Mittelrohrs (20) formschlüssig verbindbar.

## Beschreibung

### Technisches Gebiet

Die vorliegende Erfindung bezieht sich auf ein Filterelement, welches zum Filtern von Luft verwendbar ist, sowie auf ein Gehäuse für das Filterelement. Insbesondere betrifft die Erfindung ein Luftfilterelement, ein Gehäuse für ein Luftfilterelement und eine Filteranordnung.

Filterelemente finden zum Filtern von Fluidströmungen oder gasförmigen Medien Verwendung. Beispielsweise kommen sie bei der Filterung einer Luftströmung zum Einsatz, die in einen Insassenraum eines Kraftfahrzeugs geleitet wird. Hierbei wird insbesondere eine im Kraftfahrzeug eingebaute Klimaanlage verwendet, um die Außenluft in Bezug auf darin vorhandene gesundheitsschädliche Stoffe, Gerüche, usw. zu reinigen. Geeignete Filter bzw. Innenraumfilter in diesem Zusammenhang sind beispielsweise Partikelfilter, Geruchsfilter oder deren Kombination.

Es ist ferner notwendig, Luft, welche einer Brennkraftmaschine zugeführt wird, von Schwebstoffen zu befreien. Derartige Luftfilter, beispielsweise für Lastkraftwagen, Baumaschinen, Landmaschinen oder auch Schiffsmotoren, müssen zuverlässig und robust ausgestaltet werden, da sie im Betrieb hohen mechanischen Belastungen ausgesetzt sein können.

Filter haben in der Regel ein Gehäuse mit einem Gehäuseoberteil, wobei in das Gehäuse ein austauschbares Filterelement einbaubar ist. Das Filterelement ist in der Regel rohrförmig aufgebaut und wird mittels einer Dichtung in dem Gehäuse reibschlüssig gehalten.

### Stand der Technik

DE 20 2007 004 475 U1 offenbart eine Filteranordnung, bei der ein Filterhalter mindestens eine Durchgangsöffnung aufweist, die zur dichtenden Aufnahme eines mit einem Adapterkragen versehenen Filterelements dient.

Als Dichtung zwischen Gehäuse bzw. Gehäusedeckel und Filterelement wird beispielsweise Schaum aus Polyurethanen (PU), auch PUR-Schaum genannt, verwendet. Solcher Schaum aus Polyurethanen entspannt sich jedoch nach Wärmelagerung (künstliche Lagerung) bzw. hoher Temperatureinwirkung oder Temperaturwechsel.

Anders ausgedrückt, der Schaum aus Polyurethanen ist nach einer Wärmelagerung kräftefrei. Dies führt bei im Gehäuse reibschlüssig gehaltenen Filterelementen immer wieder dazu, dass bei Schwinganregung der Anordnung aus den Teilen Gehäuse mit Gehäuseoberteil, Dichtung und Filterelement größere kritische Bewegungen zwischen den einzelnen Teilen auftreten. Eine solche Schwinganregung kann beispielsweise beim Betrieb eines Kraftfahrzeugs auftreten, in welches der Filter eingebaut ist.

### Offenbarung der Erfindung

Es ist daher Aufgabe der Erfindung, ein verbessertes Luftfiltersystem ein verbessertes Luftfilterelement und ein verbessertes Verfahren zum Austausch eines Luftfilterelements zu schaffen.

Diese Aufgabe wird durch ein Luftfiltersystem mit den Merkmalen des Patentanspruchs 1, dem Luftfilterelement mit den Merkmalen des Patentanspruchs 11 und dem Verfahren nach Patentanspruch 15 gelöst.

Vorteilhafte weitere Ausgestaltungen des Filterelements sind in den abhängigen Patentansprüchen angegeben.

Demgemäß dient das Luftfiltersystem insbesondere für die Ansaugluft von Brennkraftmaschinen und umfasset ein Gehäuse und mindestens ein Luftfilterelement zum Filtern von Luft. Das Gehäuse umfasst ein Gehäuseoberteil mit einem Reinluftstutzen zur Ableitung von im Luftfilterelement gereinigter Reinluft aus dem Gehäuse und eine Dichtungsaufnahme zum formschlüssigen Verbinden mit einer zylindrischen, insbesondere radial wirkenden Dichtung des Luftfilterelements und zum Halten des Luftfilterelements. Die Dichtungsaufnahme weist eine zylindrische, sich von dem Gehäuseoberteil in den Innenraum des Gehäuses hinein erstreckende Dichtfläche auf, die den Reinluftstutzen umschließt und an welche die Dichtung des Luftfilterelements radial anlegbar ist, wobei an der Dichtfläche eine radial über die Dichtfläche hinausragende, ringförmige Auskragung angeordnet ist, welche von der Dichtung des Luftfilterelements formschlüssig umgreifbar ist.

Durch diese Ausgestaltung der Dichtungsaufnahme und der Dichtung ist insbesondere gewährleistet, dass die Dichtung zwischen Gehäuse und Filterelement auch bei Wärmelagerung nicht kräftefrei wird.

Das Filterelement hält außerdem durch den Formschluss auch ohne eine axiale Verspannung an der Dichtungsaufnahme und kann nicht herausfallen. Beispielsweise ist die Dichtung und/oder die Gehäuseform bzw. die Dichtungsaufnahme derart ausgestaltet, dass der Formschluss ein Gewicht des mit Partikeln beladenen Filterelements fest hält.

Die zylindrische Form der Dichtfläche kann bevorzugt als runder Zylinder, insbesondere als Kreiszylinder, elliptischer Zylinder oder ovaler Zylinder ausgebildet sein. Die Form bildet dabei bevorzugt den äußeren Umfang des Luftfilterelements nach. Es kann jedoch auch eine mehreckige, insbesondere rechteckige Form gewählt werden.

Das Luftfilterelement ist bevorzugt als Rundfilterelement ausgebildet, welches einen zickzackförmig gefalteten, ringförmig geschlossenen Filterbalg umfasst, der einen zentralen Innenraum umschließt. Der Filterbalg ist an seinen axialen Enden mit Endscheiben abgedichtet, wobei eine Endscheibe eine zentrale, ringförmige Einström- oder Ausströmöffnung aufweist, an der eine Dichtung zur Trennung von Roh- und Reinseite angeordnet ist. Das Luftfilterelement kann jedoch auch zwei zickzackförmig gefaltete, ringförmig geschlossenen Filterbälge aufweisen, die ineinander angeordnet sind und so miteinander verbunden sind, dass der eine Filterbalg radial von außen nach innen durchströmbar ist und der andere Filterbalg radial von innen nach außen durchströmbar ist. Denkbar ist auch ein Luftfilterelement mit in Strömungsrichtung verlaufenden Kanälen, die dadurch gebildet werden, dass abwechselnd eine glatte Filtermedienlage und eine gewellte Filtermedienlage aufeinander gelegt sind und die dazwischen gebildeten Kanäle wechselseitig verschlossen werden.

Als Filtermedium kann jeweils ein flaches, poröses Filtermedium verwendet werden, zum Beispiel einzelne Lagen oder Kombinationen von Zellulosemedien, Glasfasermedien, Vliese aus schmelzgeblasenen oder gesponnenen Kunststofffasern.

In einer Ausführungsform ist in dem Gehäuse insbesondere koaxial zum und in Fortsetzung des Reinluftstutzens ein durchströmbares Mittelrohr zur radialen Stützung des Luftfilterelementes angeordnet ist, wobei das Mittelrohr in dem Gehäuse entweder lösbar einbaubar ist oder einstückig mit dem Gehäuseoberteil des Gehäuse ausgebildet ist. Durch die Anordnung des Mittelrohrs am Gehäuse kann eine zuverlässige Abstützung des Filterbalges im Betrieb sicher gestellt werden, ohne dass in dem wechselbaren Filterelement ein Mittel zur Abstützung vorgesehen ist. Dadurch kann das Filterelement leichter gestaltet und günstiger ausgeführt werden. Ferner wird durch das Mittelrohr ein eventuell vorhandenes, innerhalb des Mittelrohrs angeordnetes Sekundärelement vor mechanischen Beschädigungen geschützt, wenn das Hauptfilterelement eingebaut oder ausgebaut wird.

Es ist vorteilhaft, wenn das Mittelrohr derart ausgestaltet ist, dass eine Dichtung des Filterelements an dem Mittelrohr durch Verrasten lösbar befestigbar ist und/oder das Mittelrohr durch Verrasten an dem Gehäuseoberteil lösbar befestigbar ist.

In einer Ausführungsform ist die radial über die Dichtfläche hinausragende, ringförmige Auskragung durch einen sich ringförmig erstreckenden Mittelrohrkragen gebildet ist, der mit dem Mittelrohr fest verbunden, insbesondere einstückig ausgebildet ist und/oder insbesondere an die Dichtfläche angrenzt. Auf diese Weise ist der Hinterschnitt, der durch die über die Dichtfläche hinausragende Auskragung gebildet wird, einfach herzustellen. Ferner werden bei gleichbleibendem Gehäuse unterschiedliche Varianten von Luftfilterelement und Mittelrohr ermöglicht, beispielsweise können durch Variation der Länge von Mittelrohr, Luftfilterelement und dem auf das Gehäuseoberteil montierbaren Gehäuseunterteil unterschiedliche Luftfiltersysteme mit unterschiedlichen Filterflächen bei gleichbleibendem Gehäuseoberteil realisiert werden.

In einer Ausführungsform ist die Dichtfläche radial außen oder innen an einem zylindrischen, von dem Gehäuseoberteil in den Innenraum des Gehäuses hineinragenden Kragen gebildet.

In einer Ausführungsform ist die Dichtungsaufnahme durch eine den Reinluftstutzen ringförmig umschließende Aussparung oder Nut im Gehäuse, insbesondere im Gehäuseoberteil, gebildet.

In einer Ausführungsform ist die Dichtfläche durch eine zylindrische, radial innere oder äußere Wand der Aussparung oder Nut gebildet.

In einer Ausführungsform ist das Mittelrohr derart ausgestaltet, dass eine Dichtung des Luftfilterelements an dem Mittelrohr durch Verrasten lösbar befestigbar ist. Dies kann zum Beispiel dadurch erreicht werden, dass die Dichtung des Filterelements eine Hinterschneidung in Form einer radial ringförmig umlaufenden Nut aufweist, welcher der Form der Auskragung des Gehäuseoberteils oder des Mittelrohrs entspricht. Die Hinterschneidung kann beispielsweise so ausgestaltet sein, dass die Oberfläche der Hinterschneidung von der Auskragung beabstandet ist, wenn das Filterelement im Gehäuse eingebaut ist. Die Hinterschneidung kann jedoch beispielsweise auch so ausgestaltet sein, dass die Oberfläche der Hinterschneidung an der Auskragung kraftlos oder unter leichter Verspannung anliegt, wenn das Filterelement im Gehäuse eingebaut ist.

Beim Einbau wird die Dichtung des Filterelements bevorzugt zuerst über die Auskragung geschoben und dabei radial verspannt und elastisch verformt. Nachdem die Dichtfläche der Dichtung über die Auskragung gelangt ist legt sie sich radial an der korrespondierenden Dichtfläche des Gehäuses an. Ist in der Dichtung des Filterelements eine Hinterschneidung vorgesehen, rastet die Auskragung in den Hinterschnitt ein und stellt damit in Einschubrichtung einen Formschluss zwischen Gehäuse und Filterelement her. Der Formschluss kann jedoch auch ohne Hinterschneidung stattfinden, indem die Auskragung am Gehäuse die Dichtung des Filterelements im eingebauten Zustand dauerhaft so verformt, dass in der Dichtung eine korrespondierende Hinterschneidung gebildet wird.

Das Mittelrohr kann ebenfalls durch Verrasten an dem Gehäuseoberteil lösbar befestigbar sein.

Die ringförmige Auskragung kann einen geschlossenen Ring bilden oder regelmäßig oder unregelmäßig unterbrochen sein.

In einer Ausführungsform umfasst das ein Hauptfilterelement und ein Sekundärfilterelement, welches dem Hauptfilterelement in Strömungsrichtung der Luft nachgeordnet ist, wobei das Hauptfilterelement an einer Außenseite des Mittelrohrs und das Sekundärfilterelement an einer Innenseite des Mittelrohrs befestigbar ist, wenn die Luftfilterelemente in dem Gehäuse lösbar eingebaut sind.

In einer Ausführungsform weist das Hauptfilterelement eine Dichtung auf zum Halten des Hauptfilterelements an dem Gehäuseoberteil und/oder dem Mittelrohr sowie zum Abdichten des Raums zwischen Hauptelement und Gehäuseoberteil, wenn das Hauptfilterelement in dem Gehäuse lösbar eingebaut ist, und das Sekundärfilterelement weist eine Dichtung auf zum Halten des Sekundärfilterelements an dem Gehäuseoberteil und/oder dem Mittelrohr sowie zum Abdichten des Raums zwischen Sekundärelement und Gehäuseoberteil, wenn das Sekundärfilterelement in dem Gehäuse lösbar eingebaut ist. Bevorzugt weisen beide Dichtungen und deren korrespondierenden Dichtflächen und Dichtungsaufnahmen eine Konfiguration gemäß der Erfindung auf.

Bevorzugt ist am Gehäuse eine radial nach außen weisende Dichtfläche, insbesondere für das Hauptfilterelement, mit einer radial nach außen weisenden, über die Dichtfläche hinausragenden Auskragung vorgesehen.

Bevorzugt ist am Gehäuse eine radial nach innen weisende Dichtfläche, insbesondere für das Sekundärfilterelement, mit einer radial nach innen weisenden, über die Dichtfläche hinausragenden Auskragung vorgesehen.

Die Erfindung betrifft ferner ein Luftfilterelement zum lösbaren Einbau in ein Gehäuse eines insbesondere erfindungsgemäßen Luftfiltersystems, wobei das Luftfilterelement eine Dichtung zum Halten des Luftfilterelements an dem Gehäuse und zum Abdichten eines Raums zwischen dem Luftfilterelement und dem Gehäuseoberteil umfasst, wenn das Luftfilterelement in dem Gehäuse lösbar eingebaut ist, wobei die Dichtung mit der Dichtungsaufnahme des Gehäuseoberteils formschlüssig verbindbar ist.

Der Formschluss erfolgt vorzugsweise in radialer Richtung, d.h. ein Teil der einen Komponente, bevorzugt des Gehäuses, greift radial in das andere Teil, bevorzugt das Luftfilterelement, ein. Dadurch wird eine formschlüssige Verbindung erreicht, die eine axiale Bewegung des Filterelements aus dem Dichtsitz heraus erschwert.

Das Filterelement ist vorzugsweise ein Luftfilterelement, beispielsweise zum Filtern von Verbrennungsluft für eine Brennkraftmaschine. Die Erfindung kann jedoch auch insgesamt bei Flüssigkeitsfiltern, z. B. Ölfiltern oder Kraftstofffiltern Verwendung finden.

Das vorgeschlagene Filterelement ist einfach aufgebaut und aufwandsgünstig herstellbar. Durch die Ausgestaltung der Dichtung ist gleichzeitig gewährleistet, dass die Dichtung zwischen Gehäuse und Filterelement auch bei Wärmelagerung nicht kräftefrei wird.

Das Filterelement hält außerdem durch den Formschluss auch ohne eine Verspannung an der Dichtungsaufnahme und kann nicht herausfallen. Beispielsweise ist die Dichtung und/oder die Gehäuseform bzw. die Dichtungsaufnahme derart ausgestaltet, dass der Formschluss ein Gewicht des mit Partikeln beladenen Filterelements fest hält.

In Ausführungsformen des Filterelements ist dasselbe ausschließlich steckbar mit dem Gehäuse bzw. der Dichtungsaufnahme verbindbar. Dadurch wird ein Ein- und/oder Ausbau vereinfacht und aufwändige Bajonett- oder Schraubverbindungen vermieden.

Vorzugsweise ist die Dichtung derart ausgestaltet, dass das Filterelement an dem Mittelrohr durch Verrasten lösbar befestigbar ist. Man erhält somit eine besonders feste und fluiddichte Verbindung auch bei Schwingungen oder Vibrationen des Filterelements und/oder des Gehäuses.

In einer Ausführungsform bildet die Dichtung eine Hinterschneidung, in welche die ringförmige Auskragung, wenn das Luftfilterelement in dem Gehäuse lösbar eingebaut ist, radial hineinragt.

In einer Ausführungsform ist die Dichtung derart ausgestaltet, dass das Filterelement an dem Gehäuseoberteil und/oder dem Mittelrohr durch Verrasten lösbar befestigbar ist, wobei insbesondere das Verrasten des Filterelements dem Gehäuseoberteil und/oder an dem Mittelrohr beim lösbaren Einbau des Filterelements haptisch wahrnehmbar ist. Eine Handhabbarkeit des Filterelements wird dadurch verbessert, da wahrnehmbar wird, ob das Filterelement korrekt und dichtend montiert wurde.

In einer Ausführungsform weist die Dichtung des Filterelements eine Hinterschneidung in Form einer radial ringförmig umlaufenden Nut auf, welche insbesondere der Form der Auskragung des Gehäuseoberteils oder des Mittelrohrs entspricht. Die Hinterschneidung kann beispielsweise so ausgestaltet sein, dass die Oberfläche der Hinterschneidung von der Auskragung beabstandet ist, wenn das Filterelement im Gehäuse eingebaut ist. Die Hinterschneidung kann jedoch beispielsweise auch so ausgestaltet sein, dass die Oberfläche der Hinterschneidung an der Auskragung kraftlos oder unter leichter Verspannung anliegt, wenn das Filterelement im Gehäuse eingebaut ist.

Die Dichtung ist vorzugsweise zumindest teilweise aus einer Vergussmasse, zum Beispiel einem geschäumten PUR-Material, gefertigt. Insbesondere sind die Dichtung und/oder die Materialien des Filterelements oder des Gehäuse für Betriebstemperaturen zwischen -30 °C und 90 °C ausgestaltet. Bevorzugt ist die Dichtung einstückig mit einer Endscheibe aus gleichem Material hergestellt. Weiter bevorzugt ist die Endscheibe aus der Vergussmasse hergestellt und wird beim Vergießen mit dem Filter dichtendbalg verbunden.

Außerdem kann die Dichtung mindestens ein Versteifungselement zum Versteifen der Dichtung aufweisen.

In einer Ausführungsform hat die Dichtung eine Innenseitendichtlinie auf der Innenseite des Hauptelements und eine Dichtungsstegaußenseite. Bevorzugt hat die Dichtung an der Dichtungsstegaußenseite eine Vielzahl von Auskerbungen, die entlang des Umfangs des Dichtungsstegs nebeneinander angeordnet sind.

Bei den erfindungsgemäßen Dichtungen dient die Außenseite des Dichtungsstegs dazu, einen Anpressdruck auf die insbesondere radial innen angeordnete Dichtfläche zu erzeugen, wenn das Filterelement in dem Gehäuse montiert wird oder montiert ist. Dies Außernseite des Dichtungssteges stützte sich dabei bevorzugt radial an einer beispielsweise ringförmigen Fläche der Dichtungsaufnahme ab. Sind derartige Auskerbungen vorgesehen, reduzieren diese den Druck bzw. mechanischen Widerstand, der bei der Montage des Filterelements wahrnehmbar ist.

Die Erfindung betrifft ferner ein Verfahren zum Austausch eines in einem erfindungsgemäßen Luftfiltersystem, bei welchem das Gehäuse geöffnet wird, insbesondere durch Lösen eines Gehäuseunterteils vom Gehäuseoberteil, anschließend ein insbesondere erfindungsgemäßes Luftfilterelement aus dem Gehäuse entnommen wird und daran anschließend ein insbesondere erfindungsgemäßes Luftfilterelement in das Gehäuse montiert wird, derart, dass die Dichtung mit der Dichtungsaufnahme des Gehäuseoberteils formschlüssig verbunden wird.

Beim Einbau wird die Dichtung des Filterelements bevorzugt zuerst über die Auskragung geschoben und dabei radial verspannt und elastisch verformt. Nachdem die Dichtfläche der Dichtung über die Auskragung gelangt ist legt sie sich radial an der korrespondierenden Dichtfläche des Gehäuses an. Ist in der Dichtung des Filterelements eine Hinterschneidung vorgesehen, rastet die Auskragung in den Hinterschnitt ein und stellt damit in Einschubrichtung einen Formschluss zwischen Gehäuse und Filterelement her. Der Formschluss kann jedoch auch ohne Hinterschneidung stattfinden, indem die Auskragung am Gehäuse die Dichtung des Filterelements im eingebauten Zustand dauerhaft so verformt, dass in der Dichtung ein korrespondierender Hinterschnitt gebildet wird.

Bei dem beschriebenen Filterelement ist ein Formschluss in der Dichtung zum Gehäuse hin gegeben, welcher den Vorteil hat, dass die Dichtung selbst nach ihrer Alterung bzw. nach hoher Temperatureinwirkung oder Temperaturwechsel in Position gehalten wird. Dadurch kann es auch bei hohen Schwingbelastungen, wie sie beispielsweise beim Betrieb eines Kraftfahrzeugs auftreten können, nicht zu kritischen Bewegungen zwischen den einzelnen Teilen Gehäuse, Dichtung und Filterelement kommen.

Das beschriebene Verrasten von Dichtung und Mittelrohr wird durch eine spezielle Ausgestaltung von Dichtung und Mittelrohr bewerkstelligt und bildet somit den Formschluss in der Dichtung. Der Formschluss hat den Vorteil, dass ein Benutzer bei der Montage des Filterelements in dem Gehäuse eine haptische Rückmeldung erhält, die durch ein Einschnappen der Formschlüsse gegeben ist.

Als weiterer Vorteil des beschriebenen Formschlusses in der Dichtung kann das Filterelement, selbst wenn das Gehäuse zur Demontage des Filterelements geöffnet wurde, nicht beispielsweise durch Schwerkraft einfach aus dem Gehäuse fallen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1 eine dreidimensionale Ansicht eines Luftfilters gemäß eines ersten Ausführungsbeispiels;
Fig. 2 eine Schnittansicht des Luftfilters von Fig. 1, in den ein Filterelement gemäß des ersten Ausführungsbeispiels lösbar eingebaut ist;
Fig. 3 eine dreidimensionale Detailansicht des Filterelements gemäß des ersten Ausführungsbeispiels;
Fig. 4 eine Detailansicht eines Filterelements gemäß eines zweiten Ausführungsbeispiels;
Fig. 5 eine Detailansicht eines Filterelements gemäß eines dritten Ausführungsbeispiels, das in den Filter von Fig. 1 eingebaut ist;
Fig. 6 eine dreidimensionale Ansicht eines Hauptfilterelements des Filterelements gemäß eines vierten Ausführungsbeispiels;
Fig. 7 eine dreidimensionale Detailansicht des Hauptfilterelements des Filterelements von Fig. 6;
Fig. 8 eine Detailansicht eines Luftfiltersystems gemäß einem fünften Ausführungsbeispiel; und
Fig. 9 eine Detailansicht eines Luftfiltersystems gemäß einem sechsten Ausführungsbeispiel.

In den Figuren sind gleiche oder funktionsgleiche Elemente, sofern nichts anderes angegeben ist, mit denselben Bezugszeichen versehen.

### Ausführungsform(en) der Erfindung

Die Erfindung ist nachfolgend anhand eines Filters für die Verbrennungsluft einer Brennkraftmaschine, wie beispielsweise ein Kraftfahrzeug, beschrieben. Entsprechende Filterelemente können anstelle einer Filterung von Luft beispielsweise zur Filterung eines anderen gasförmigen oder auch eines flüssigen Mediums, wie beispielsweise Öl, ausgestaltet sein kann.

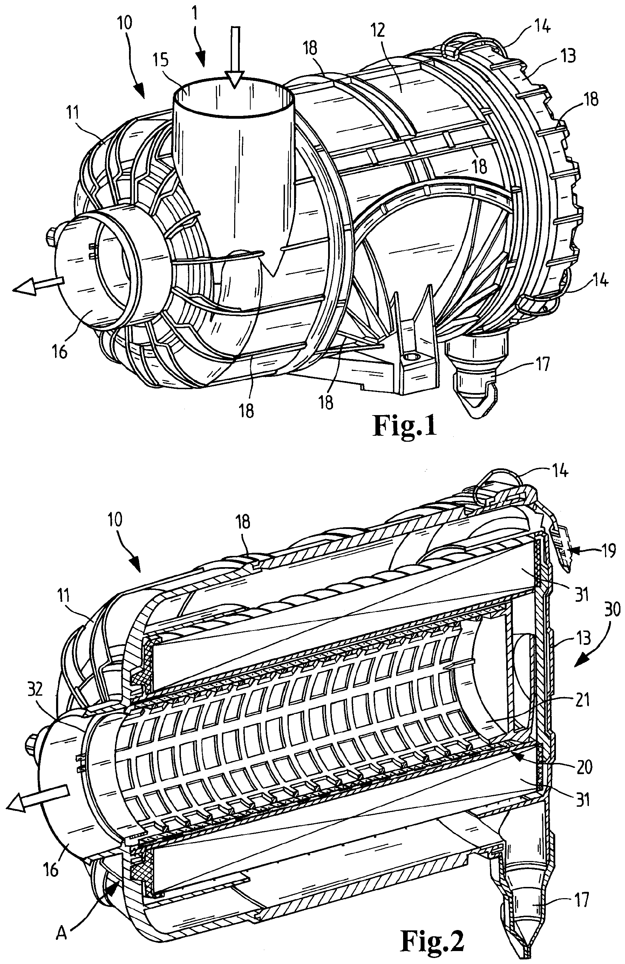

Wie in Fig. 1 gezeigt, umfasst der Filter 1 gemäß des ersten Ausführungsbeispiels ein Gehäuse 10 mit einem Gehäuseoberteil 11, das über einen Gehäusemantel 12 mit einem Gehäuseunterteil 13 verbunden ist. Das Gehäuse 10 ist in Fig. 1 also ein dreiteiliges Gehäuse 10. Das Gehäuseunterteil 13 ist mit Klammern 14 an dem Gehäusemantel 12 gehalten. An dem Gehäuseoberteil 11 ist ein Rohluftstutzen 15 angeordnet, mit welchen Rohluft, ungereinigte Luft, in der durch den senkrechten Blockpfeil gezeigten Strömungsrichtung in das Gehäuse 10 eingeleitet werden kann. An dem Gehäuseoberteil 11 ist zudem ein Reinluftstutzen 16 angeordnet, mit welchem Reinluft, von Verunreinigungen gereinigte Luft, in der durch den weißen Blockpfeil gezeigten Strömungsrichtung aus dem Gehäuse 10 ausgeleitet werden kann. An dem Gehäusemantel 12 bzw. dem Gehäuseunterteil 13 ist ein Austragsventil 17 angeordnet, mit welchem Partikel, die in der Rohluft enthalten waren, aus dem Gehäuse 10 ausgeleitet werden können. Zum Beispiel ist eine Zyklonfilterung vorgeschaltet. Das Gehäuse 10 hat an dem Gehäuseoberteil 11, dem Gehäusemantel 12 und dem Gehäuseunterteil 13 mehrere Rippen 18, die beispielsweise zur Versteifung des Gehäuses 10 bzw. des Gehäuseoberteils 11, des Gehäusemantels 12 oder des Gehäuseunterteils 13 dienen. Der Übersichtlichkeit halber sind in Fig. 1 nicht alle Rippen 18 mit einem Bezugszeichen versehen.

Fig. 2 zeigt einen Schnitt durch das Gehäuse 10, wenn darin ein Filterelement 30 zum Filtern von Luft eingebaut ist. Das Filterelement 30 umfasst ein Hauptelement 31 und ein Sekundärelement 32, die unabhängig voneinander im Gehäuse 10 montierbar sind. Das Hauptelement 31 dient zur Filterung erster vorbestimmter Bestandteile aus der Luft, wie beispielsweise Grobstaub. Das Sekundärelement 32 dient zur Filterung zweiter vorbestimmter Bestandteile aus der Luft, wie beispielsweise Feinstaub. Das Sekundärelement 32 ist dem Hauptelement 31 in Strömungsrichtung der Luft nachgeordnet, wie es mittels der Blockpfeile in Fig. 1 und Fig. 2 ersichtlich ist.

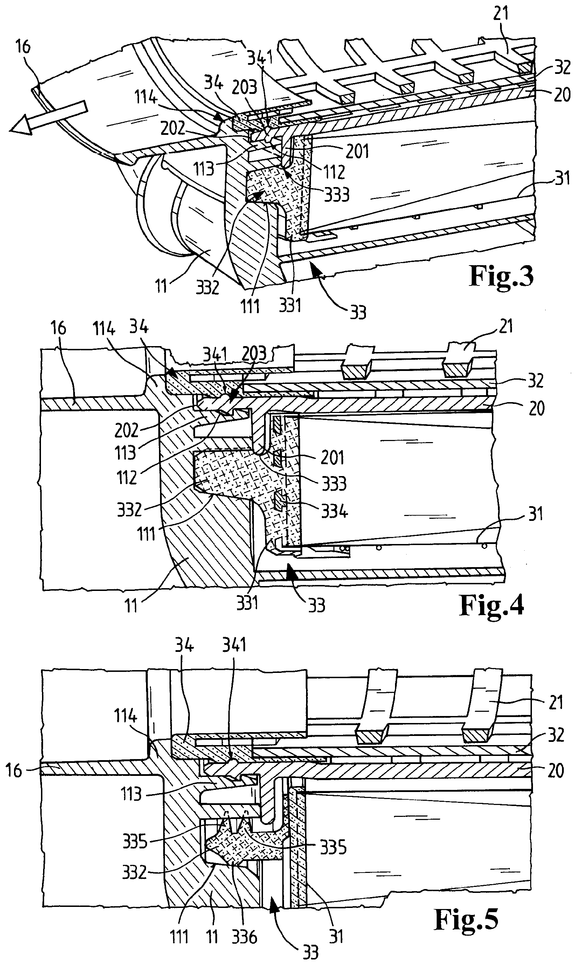

Man erkennt in Fig. 2 den verspannten Bügel 19 einer Klammer 14, um die Gehäuseteile 12 ,13 miteinander zu verbinden. Das Gehäuse 10 hat ferner ein erstes Mittelrohr 20, an welchem das rohrförmige Hauptelement 31 des Filterelements 30 angeordnet ist. Zudem hat das Gehäuse 10 ein zweites Mittelrohr 21, an welchem das rohrförmige Sekundärelement 32 des Filterelements 30 angeordnet ist. Das zweite Mittelrohr 21 hat eine gitterförmige Rohrwand und ist fluiddurchlässig. Das erste Mittelrohr 20 hat ebenfalls eine gitterförmige Rohrwand und ist fluiddurchlässig, auch wenn dies in Fig. 2 nur andeutungsweise sichtbar ist. Das erste Mittelrohr 20 ist am Gehäuse 10, genauer gesagt an seinem Gehäuseoberteil 11, befestigt. Diese Befestigung des ersten Mittelrohrs 20 ist mittels Verrasten des ersten Mittelrohrs 20 am Gehäuse 10, genauer gesagt an seinem Gehäuseoberteil 11, bewerkstelligt. Ebenfalls mittels Verrasten kann das zweite Mittelrohr 21 am Gehäuse 10, genauer gesagt an seinem Gehäuseoberteil 11, befestigt werden. Die Befestigung der Mittelrohre 20, 21 sowie des Filterelements 30 ist später in Bezug auf Fig. 3 bis Fig. 5 genauer beschrieben, welche jeweils einen in Fig. 2 mit einem Pfeil A bezeichneten Bereich detaillierter darstellen.

In Fig. 1 und Fig. 2 ist der Fall dargestellt, bei welchem das Gehäuseunterteil 13 an dem Gehäusemantel 12 mit Hilfe der Klammern 14 und Bügel 19 befestigt ist. Zum Einbau des Filterelements 30 bzw. seines Hauptelements 31 und/oder seines Sekundärelements 32 können die Klammern 14 von ihrer Verklammerung an dem Gehäusemantel 12 gelöst werden, so dass das Gehäuseunterteil 13 von dem Gehäusemantel 12 abgenommen werden kann. In diesem Zustand kann das Filterelement 30 bzw. sein Hauptelement 31 und/oder sein Sekundärelement 32 entlang des ersten Mittelrohrs 20 und/oder des zweiten Mittelrohrs 21 in das unten geöffnete Gehäuse 10 eingeschoben werden. Danach kann das Gehäuseunterteil 13 wieder mittels der Klammern 14 an dem Gehäusemantel 12 befestigt werden.

Fig. 3 zeigt das an der Außenseite des ersten Mittelrohrs 20 angeordnete Hauptelement 31 sowie das an der Innenseite des ersten Mittelrohrs 20 angeordnete Sekundärelement 32 und das zweite Mittelrohr 21. Das Hauptelement 31 hat eine ringförmige Dichtung 33 mit einem in etwa T-förmigen Querschnitt. Die Dichtung 33 kann auch als Hauptelement-Dichtung 33 bezeichnet werden. Die Dichtung 33 kann den Raum zwischen Hauptelement 31 und Gehäuseoberteil 11 abdichten. Es ergibt sich ein radialer Formschluss durch die Dichtung. Als Material für die Dichtung 33 ist Schaum aus Polyurethanen (PU) bzw. PUR-Schaum verwendbar. Die Dichtung 33 ist an einem Ende des rohrförmigen Hauptelements 31 angeordnet. Genauer gesagt, die Dichtung 33 ist mit dem Querbalken 331 des durch ihren Querschnitt gebildeten Ts am Ende des rohrförmigen Hauptelements 31 angeordnet. Die zu dem Querbalken vertikale Linie, also der Fuß 332, des Ts ragt in eine Aussparung 111 des Gehäuseoberteils 11 hinein. Der Fuß 332 des Ts bildet also eine Auskragung und kann auch als Dichtungssteg 332 der Dichtung 33 bezeichnet werden. Vorzugsweise ist die Dichtung 33 an dem Hauptelement 31 befestigt, beispielsweise mittels Verkleben. Die Dichtung 33 hat Abstützungsflächen zur radialen Abstützung des Hauptelements 31 am Gehäuseoberteil 11, wobei radial in Richtung des Rohrradius des rohrförmigen Hauptelements 31 zu verstehen ist. Somit ist mittels der Dichtung 33 eine radiale Dichtung realisiert. Die Aussparung 111 ist ein Teil des Raums zwischen Hauptelement 31 und Gehäuseoberteil 11, der abzudichten ist.

Die Dichtung 33 hat außerdem selbst eine Aussparung bzw. Hinterschneidung 333, in welche ein Teil des ersten Mittelrohrs 20, ein Mittelrohrkragen 201 ragt. Der Mittelrohrkragen 201 ist eine Auskragung des Mittelrohrs 20. Die Hinterschneidung 333 ist in Fig. 3 an dem Übergang von Fuß 332 zu Querbalken 331 der Dichtung 33 angeordnet. Die Hinterschneidung 333 der Dichtung 33 ist an die Form eines dem ersten Mittelrohr 20 abgewandten Endes des Mittelrohrkragens 201 angepasst. Die Hinterschneidung 333 und der Mittelrohrkragen 201 bilden demgemäß einen Formschluss. Zudem ist die Aussparung 111 des Gehäuseoberteils 11 so angeordnet, dass das dem ersten Mittelrohr 20 abgewandte Ende des Mittelrohrkragens 201 in die Hinterschneidung 333 der Dichtung 33 greift, wenn das Hauptelement 31 des Filterelements 30 in dem Gehäuse 10 an dem ersten Mittelrohr 20 montiert ist. Dadurch verrasten das erste Mittelrohr 20 und die Dichtung 33 miteinander. Noch genauer gesagt, verrasten sich der Mittelrohrkragen 201 des ersten Mittelrohrs 20 und die Hinterschneidung 333 der Dichtung 33. Wird bei einer Wartung des Innenraumfilters 1 ein altes Filterelement 30 aus dem Gehäuse 10 ausgebaut, indem die Verrastung zwischen erstem Mittelrohr 20 und Hinterschneidung 333 gelöst wird, kann ein neues Filterelement 30 wieder lösbar eingebaut werden. Das Eingreifen von Mittelrohrkragen 201 in die Hinterschneidung 333 bzw. ihr Verrasten ist als Überschnappen von dem Wartungspersonal haptisch wahrnehmbar. Dadurch erhält das Wartungspersonal eine Rückmeldung, dass das Hauptelement 31 des Filterelements 30 lagerichtig und damit sicher in dem Gehäuse 10 eingebaut ist.

Wie aus Fig. 3 auch noch ersichtlich, hat das Mittelrohr 20 zudem an seinem dem Gehäuseoberteil 11 zugewandten Mittelrohrende 202 eine Ausbuchtung 203, die auf die Innenseite des ersten Mittelrohrs 20 und auf die Außenseite des ersten Mittelrohrs 20 hinausragt. Die Außenseite des ersten Mittelrohrs 20 ist der Dichtung 33 zugewandt. Die Innenseite des ersten Mittelrohrs 20 ist dem Sekundärelement 32 und dem zweiten Mittelrohr 21 zugewandt. Die Ausbuchtung 203 ragt zum einen in eine entsprechende Hinterschneidung 112 des Gehäuseoberteils 11 ein, die in einem Gehäuseoberteilsteg 113 des Gehäuses 10 vorhanden ist. Zum anderen ragt die Ausbuchtung 203 in eine entsprechende Hinterschneidung 341 einer Dichtung 34 des Sekundärelements 32 ein. Die Ausbuchtung 203 ist in der Form an die Hinterschneidung 112 angepasst. Somit können die Ausbuchtung 203 und die Hinterschneidung 112 einen Formschluss bilden, wenn das erste Mittelrohr 20 in dem Gehäuse 10 montiert ist, wie in Fig. 3 dargestellt. Die Ausbuchtung 203 ist in der Form auch an die Hinterschneidung 341 angepasst. Somit können auch die Ausbuchtung 203 und die Hinterschneidung 341 einen Formschluss bilden, wenn das erste Mittelrohr 20 in dem Gehäuse 10 montiert ist, wie in Fig. 3 dargestellt. Dadurch ist das erste Mittelrohr 20 sowohl mit dem Gehäuseoberteil 11 verrastet als auch mit der Dichtung 34 des Sekundärelements 32. Diese Verrastung ist lösbar, wie zuvor beschrieben.

Die Dichtung 34 kann den Raum zwischen Sekundärelement 32 und Gehäuseoberteil 11 abdichten. Die Dichtung 34 kann auch als Sekundärelement-Dichtung 34 bezeichnet werden. Als Material für die Dichtung 34 ist, wie für die Dichtung 33, Schaum aus Polyurethanen (PU) bzw. PUR-Schaum verwendbar. Die Dichtung 34 ist an einem Ende des rohrförmigen Sekundärelements 31 angeordnet und liegt an einer Gehäuseoberteilauskragung 114 an, die an der Innenseite des Reinluftstutzens 16 angeordnet ist. Die Gehäuseoberteilauskragung 114 bildet einen axialen Anschlag für die Dichtung 34 bzw. das damit, beispielsweise mittels Verkleben, verbundene Sekundärelement 32. Axial ist in Richtung der Rohrachse des rohrförmigen Sekundärelements 32 zu verstehen.

Fig. 4 zeigt eine ähnliche Detailansicht, wie in Fig. 3, zur Erläuterung eines zweiten Ausführungsbeispiels des Filterelements 30. Der Filter 1 und das Filterelement 30 des zweiten Ausführungsbeispiels sind in weiten Teilen gleich wie der Filter 1 und das Filterelement 30 des ersten Ausführungsbeispiels aufgebaut. Daher sind im Folgenden nur die Unterschiede zwischen dem ersten und zweiten Ausführungsbeispiel beschrieben. Im Übrigen wird auf die Beschreibung des ersten Ausführungsbeispiels verwiesen.

Im Unterschied zum ersten Ausführungsbeispiel hat das Filterelement des zweiten Ausführungsbeispiels in der Dichtung 33 mindestens einen Versteifungsring 334. Fig. 4 zeigt als Beispiel drei Versteifungsringe 334, die in der Dichtung 33 nebeneinander angeordnet sind. Der Ring der Versteifungsringe 334 ist in Fig. 4 im Wesentlichen parallel zu dem Querbalken 331 der Dichtung 33 angeordnet. Die Versteifungsringe 334 können aus einem härteren Material als dem der Dichtung 33 gefertigt sein, wie beispielsweise Hartkunststoff oder Metall usw.

Aufgrund eines oder mehrerer Versteifungsringe hat die Dichtung 33 eine höhere Steifigkeit gegen Abknicken.

Fig. 5 zeigt eine ähnliche Detailansicht, wie in Fig. 3, zur Erläuterung eines dritten Ausführungsbeispiels des Filterelements 30. Der Filter 1 und das Filterelement 30 des dritten Ausführungsbeispiels sind in weiten Teilen gleich wie der Innenraumfilter 1 und das Filterelement 30 des ersten Ausführungsbeispiels aufgebaut. Daher sind im Folgenden nur die Unterschiede zwischen dem ersten und dritten Ausführungsbeispiel beschrieben. Im Übrigen wird auf die Beschreibung des ersten Ausführungsbeispiels verwiesen.

Im Unterschied zum ersten Ausführungsbeispiel ist bei dem Filterelement 30 des dritten Ausführungsbeispiels die Dichtung 33 eine 2K-Dichtung. Außerdem hat das Filterelement 30 des dritten Ausführungsbeispiels an dem Fuß 332 bzw. dem Dichtungssteg 332 der Dichtung 33 an der dem ersten Mittelrohr 20 bzw. dem Sekundärelement 32 zugewandten Seite zwei Fußzackenauskragungen 335. Zudem ist an dem Fuß 332 der Dichtung 33 an der dem ersten Mittelrohr 20 bzw. dem Sekundärelement 32 zugewandten Seite eine Fußbogenauskragung 336 gebildet. Der Fuß 332 ist insgesamt mit seinen Abmessungen an die Aussparung 111 des Gehäuseoberteils 11 angepasst, wie in Fig. 5 dargestellt. Dadurch kann der in Fig. 5 gezeigte Fuß 332 des dritten Ausführungsbeispiels ebenso einen Formschluss mit der Aussparung 111 des Gehäuseoberteils 11 bilden, auch wenn der Formschluss in diesem Fall nicht so ausgeprägt ist, wie bei den Formschlüssen des ersten und zweiten Ausführungsbeispiels. Der Fuß 332 kann mit der Aussparung 111 des Gehäuseoberteils 11 verrasten, was bei dem Einbau des Filterelements 30 in das Gehäuse 10 haptisch wahrnehmbar ist.

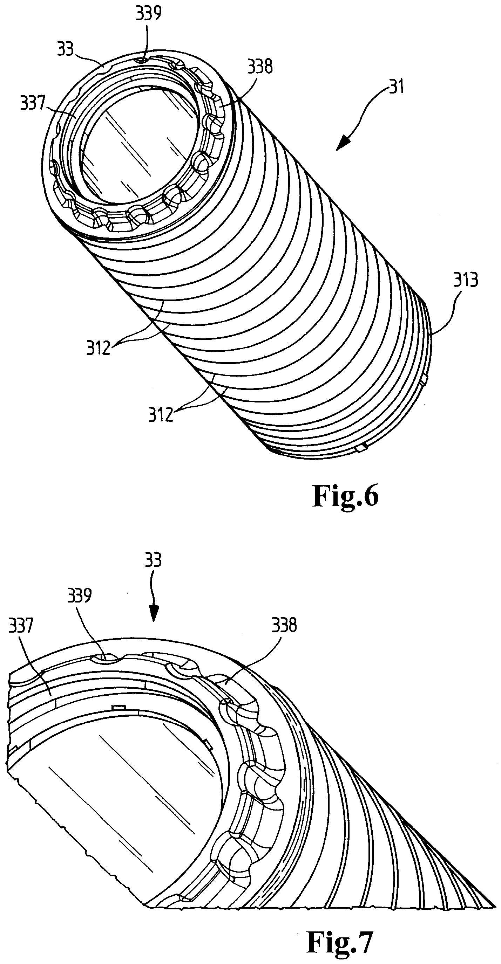

Fig. 6 zeigt ein Hauptelement 31 des Filterelements 30 gemäß einem vierten Ausführungsbeispiel in einer dreidimensionalen Gesamtansicht. Der Filter 1 und das Filterelement 30 des vierten Ausführungsbeispiels sind in weiten Teilen gleich wie der Filter 1 und das Filterelement 30 des ersten, zweiten oder dritten Ausführungsbeispiels aufgebaut. Daher sind im Folgenden vor allem die Unterschiede zwischen dem vierten und den anderen Ausführungsbeispielen beschrieben. Im Übrigen wird auf die Beschreibung des ersten bis dritten Ausführungsbeispiels verwiesen.

Das Hauptelement 31 ist in Fig. 6 ein hohlzylindrischer Körper, der an seinem Außenumfang mehrere Ringe 312 aufweist, die der Übersichtlichkeit halber in Fig. 6 nicht alle mit einem Bezugszeichen versehen sind. Unten in Fig. 6 ist das Hauptelement 31 durch einen Bodenring 313 abgeschlossen. An dem dem Bodenring 313 gegenüberliegenden Ende des Hauptelements 31 ist die Dichtung 33 angeordnet. Die Dichtung 33 hat eine Innenseitendichtlinie 337 auf der Innenseite des Hauptelements 31 und eine Dichtungsstegaußenseite 338 des Fußes 332 bzw. des Dichtungsstegs 332. Bis hierhin unterscheidet sich das Hauptelement 31 nicht von dem Hauptelement 31 des ersten, zweiten oder dritten Ausführungsbeispiels.

Bei diesem Ausführungsbeispiel hat die Dichtung 33 jedoch im Unterschied zum ersten, zweiten oder dritten Ausführungsbeispiel eine Vielzahl von Auskerbungen 339, die der Übersichtlichkeit halber in Fig. 6 nicht alle mit einem Bezugszeichen versehen sind. Die Auskerbungen 339 sind entlang des Umfangs des Dichtungsstegs 332 nebeneinander angeordnet. Fig. 7 zeigt die Form der Dichtung 33 mit den Auskerbungen 339 in vergrößertem Detail.

Bei der Dichtung 33 dient die Dichtungsaußsenseite 338 dazu, einen Anpressdruck auf die Dichtfläche zu erzeugen, wenn das Hauptelement 31 in dem Gehäuse 10 montiert wird oder montiert ist. Die Auskerbungen 339 reduzieren den Druck bzw. mechanischen Widerstand, der bei der Montage des Hauptelements 31 wahrnehmbar ist. Durch die Auskerbungen 339 wird nämlich die Dichtung 33 nicht in der Aussparung 111 des Gehäuseoberteils gekammert bzw. eingequetscht. Stattdessen kann der Dichtungssteg 332 der Dichtung 33 des Hauptelements 31 in die von den Auskerbungen 339 gebildeten Freiräume flüchten bzw. diese durch Verformung ausfüllen. Dadurch kann trotzdem eine ausreichende Dichtwirkung mittels der Dichtung 33 erzielt werden. Jedoch ist bei der Montage des Hauptelements 31 eine geringere Montagekraft als ohne Auskerbungen 339 aufzubringen. Der Grund dafür liegt darin, dass radial weniger Material zu verdrücken ist.

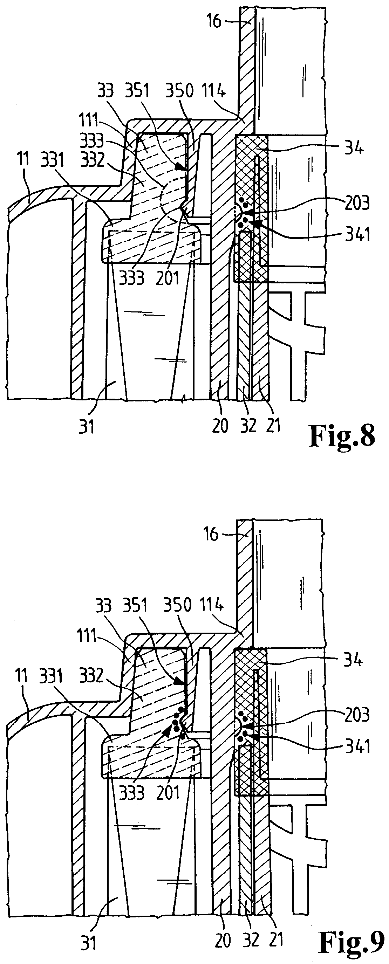

In Figuren 8 und 9 sind weitere, zu den Ausführungsbeispielen gemäß Fig. 3 und 4 ähnliche Ausführungsbeispiele gezeigt. Die Ausführungen gemäß Fig. 8 und 9 unterscheiden sich von den Ausführungsbeispielen gemäß Fig. 3 und 4 dadurch, dass das erste Mittelrohr 20 fest und unlösbar mit dem Gehäuseoberteil 11 verbunden ist. Dies kann beispielsweise durch eine einstückige Asuführung in Kunststoffspritzguss oder durch eine Schweißverbindung erfolgen. Am Mittelrohr 20 ist jeweils eine radial nach innen weisende Ausbuchtung 203 angeordnet, die auf die Innenseite des ersten Mittelrohrs 20 hinausragt. Die Innenseite des ersten Mittelrohrs 20 ist dem Sekundärelement 32 und dem zweiten Mittelrohr 21 zugewandt. Die Ausbuchtung 203 greift in eine entsprechende Hinterschneidung 341 einer Dichtung 34 des Sekundärelements 32 ein, die in den gezeigten Ausführungsbeispielen durch eine elastische Verformung der Dichtung 34 gebildet wird. Die Hinterschneidung 341 kann jedoch auch wie oben beschrieben als radiale Nut in der Dichtung 34 vorgesehen sein.

Die Dichtung 34 kann den Raum zwischen Sekundärelement 32 und Gehäuseoberteil 11 abdichten. Die Dichtung 34 kann auch als Sekundärelement-Dichtung 34 bezeichnet werden. Als Material für die Dichtung 34 ist, wie für die Dichtung 33, Schaum aus Polyurethanen (PU) bzw. PUR-Schaum verwendbar. Die Dichtung 34 ist an einem Ende des rohrförmigen Sekundärelements 32 angeordnet und liegt an einer Gehäuseoberteilauskragung 114 an, die an der Innenseite des Reinluftstutzens 16 angeordnet ist. Die Gehäuseoberteilauskragung 114 bildet einen axialen Anschlag für die Dichtung 34 bzw. das damit, beispielsweise mittels Verkleben, verbundene Sekundärelement 32. Axial ist in Richtung der Rohrachse des rohrförmigen Sekundärelements 32 zu verstehen. Radial außerhalb des Mittelrohrs 20 ist ein ringförmiger Steg 350 mit einer kreiszylindrischen Dichtfläche 351 am Gehäuseoberteil 11 angeordnet, der an seinem in den Innenraum des Gehäuses 10 weisenden Ende eine radial nach außen weisende Ausbuchtung 203 aufweist, die in eine Hinterschneidung 333 der Dichtung 33 eingreift. Fig. 8 zeigt dabei zwei Varianten der Hinterschneidung, wobei der Querschnitt der kleineren Hinterschneidung dem Querschnitt der Ausbuchtung 203 entspricht und so die Oberfläche der Hinterschneidung 333 im Einbauzustand des Hauptfilterelements 31 die Ausbuchtung 203 eng umschließt. Die gestrichelt dargestellte Variante der Hinterschneidung 333 weist eine innere Oberfläche auf, die von der Oberfläche der Hinterschneidung 333 im Einbauzustand des Hauptfilterelements 31 derart beabstandet ist, das sich ein Zwischenraum zwischen Ausbuchtung 203 und Hinterschneidung 333 bildet. In der in Fig. 9 gezeigten Variante wird die Hinterschneidung 333 durch elastische Verformung der Dichtung 33 gebildet (gepunktet angedeutet).

Alle zuvor beschriebenen Ausführungsbeispiele des Filters 1, des Filterelements 30 und des Gehäuses 10 können einzeln oder in allen möglichen Kombinationen Verwendung finden. Hierbei sind insbesondere folgende Modifikationen denkbar.

Es sind andere als die dargestellten und beschriebenen Geometrien und Abmessungen für das Filterelement 30 wählbar, soweit die Gegebenheiten am Einbauort des Filterelements 30 zu berücksichtigen sind und ein lösbarer, haptisch wahrnehmbarer Einbau des Filterelements 30 in dem Gehäuse 10 möglich ist.

Anstelle eines Hinterschnitts in den Dichtungen 33, 34 kann die Dichtung 33 und/oder die Dichtung 34 auch eine Auskragung oder Ausbuchtung aufweisen, die in einen Hinterschnitt des Gehäuseoberteils 11 oder des ersten Mittelrohrs 20 eingreift. Die in den Ausführungsbeispielen beschriebene Variante des Formschlusses zwischen den Dichtungen 33, 34 und Gehäuse 10 wird jedoch aus Stabilitätsgründen bevorzugt.

Als Material für die Dichtung 33 kann auch Folie zum Einsatz kommen. Ebenso kann ist als Material für die Dichtung 34 auch Folie verwendbar.

Die Anzahl der Auskerbungen 339 an der Dichtung 33 ist geeignet wählbar. Es kann auch nur eine Auskerbung 339 vorhanden sein. Alternativ können auch mehr Auskerbungen 339 vorhanden sein als in Fig. 6 gezeigt sind.

## Patentansprüche

1. Luftfiltersystem (1), insbesondere für die Ansaugluft von Brennkraftmaschinen, umfassend ein Gehäuse (10) mit einem Gehäuseoberteil (11) und ein Luftfilterelement (30, 31, 32) zum Filtern von Luft das Gehäuse umfassend einen Reinluftstutzen (16) zur Ableitung von Reinluft aus dem Gehäuse (10) und eine Dichtungsaufnahme (111) zum formschlüssigen Verbinden mit einer zylindrischen, insbesondere radial wirkenden Dichtung (33, 34) des Luftfilterelements (30, 31, 32) und zum Halten des Luftfilterelements (31), wobei die Dichtungsaufnahme (111) eine zylindrische, sich von dem Gehäuseoberteil (11) in den Innenraum des Gehäuses (10) hinein erstreckende Dichtfläche aufweist, die den Reinluftstutzen (16) umschließt und an welche die Dichtung (33, 34) des Luftfilterelements (30, 31, 32) radial anlegbar ist, wobei an der Dichtfläche eine radial über die Dichtfläche hinausragende, ringförmige Auskragung (201) angeordnet ist, welche von der Dichtung des Luftfilterelements (30, 31, 32) formschlüssig umgreifbar ist.

2. Luftfiltersystem (1) nach Anspruch 1, **dadurch gekennzeichnet, dass** in dem Gehäuse insbesondere koaxial zum und in Fortsetzung des Reinluftstutzens (16) ein durchströmbares Mittelrohr (20) zur Stützung des Luftfilterelementes (31) angeordnet ist, wobei das Mittelrohr (20) in dem Gehäuse (10) entweder lösbar einbaubar ist oder einstückig mit dem Gehäuseoberteil (11) des Gehäuse ausgebildet ist.

3. Luftfiltersystem (1) nach einem der vorhergehenden Ansprüche, wobei die radial über die Dichtfläche hinausragende, ringförmige Auskragung (201) durch einen sich ringförmig erstreckenden Mittelrohrkragen (201) gebildet ist, der mit dem Mittelrohr fest verbunden, insbesondere einstückig ausgebildet ist und/oder insbesondere an die Dichtfläche angrenzt.

4. Luftfiltersystem (1) nach einem der vorhergehenden Ansprüche, wobei die Dichtfläche radial außen oder innen an einem zylindrischen, von dem Gehäuseoberteil in den Innenraum des Gehäuses (10) hineinragenden Kragen gebildet ist.

5. Luftfiltersystem (1) nach einem der vorhergehenden Ansprüche, wobei die Dichtungsaufnahme (111) durch eine den Reinluftstutzen (16) ringförmig umschließende Aussparung oder Nut im Gehäuse (10), insbesondere im Gehäuseoberteil (11), gebildet ist.

6. Luftfiltersystem (1) nach Anspruch 5, wobei die Dichtfläche durch eine zylindrische, radial innere oder äußere Wand der Aussparung oder Nut gebildet ist.

7. Luftfiltersystem (1) nach einem der vorhergehenden Ansprüche, wobei das Mittelrohr (20) derart ausgestaltet ist, dass eine Dichtung (33, 34) des Luftfilterelements (30) an dem Mittelrohr (20) durch Verrasten lösbar befestigbar ist und/oder das Mittelrohr (20) durch Verrasten an dem Gehäuseoberteil (11) lösbar befestigbar ist.

8. Luftfiltersystem (1) nach einem der vorhergehenden Ansprüche, wobei die ringförmige Auskragung (201) einen geschlossenen Ring bildet oder regelmäßig oder unregelmäßig unterbrochen ist.

9. Luftfiltersystem (1) nach einem der Ansprüche 2 - 8, mit einem Hauptfilterelement (31) und einem Sekundärfilterelement (32), welches dem Hauptfilterelement (31) in Strömungsrichtung der Luft nachgeordnet ist, wobei das Hauptfilterelement (31) an einer Außenseite des Mittelrohrs (20) und das Sekundärfilterelement (32) an einer Innenseite des Mittelrohrs (20) befestigbar ist, wenn die Luftfilterelemente (30, 31, 32) in dem Gehäuse (10) lösbar eingebaut sind.

10. Luftfiltersystem (1) nach Anspruch 9, wobei das Hauptfilterelement (31) eine Dichtung (33) aufweist zum Halten des Hauptfilterelements (31) an dem Gehäuseoberteil (11) und/oder dem Mittelrohr (20) sowie zum Abdichten des Raums (111) zwischen Hauptelement (31) und Gehäuseoberteil (11), wenn das Hauptfilterelement (31) in dem Gehäuse (11) lösbar eingebaut ist, und das Sekundärfilterelement (32) eine Dichtung (34) aufweist zum Halten des Sekundärfilterelements (32) an dem Gehäuseoberteil (11) und/oder dem Mittelrohr (20) sowie zum Abdichten des Raums zwischen Sekundärelement (32) und Gehäuseoberteil (11), wenn das Sekundärfilterelement (32) in dem Gehäuse (10) lösbar eingebaut ist.

11. Luftfilterelement (30) zum lösbaren Einbau in ein Gehäuse (10) eines Luftfiltersystems nach einem der vorhergehenden Ansprüche, wobei das Luftfilterelement (30) eine Dichtung (33, 34) zum Halten des Luftfilterelements (30) an dem Gehäuse (10) und zum Abdichten eines Raums (111) zwischen dem Luftfilterelement (30) und dem Gehäuseoberteil (11) umfasst, wenn das Luftfilterelement (30) in dem Gehäuse (10) lösbar eingebaut ist, wobei die Dichtung (33, 34) mit der Dichtungsaufnahme (111) des Gehäuseoberteils (11) formschlüssig verbindbar ist.

12. Luftfilterelement (30) nach Anspruch 9, wobei die Dichtung eine Hinterschneidung (333) bildet, in welche die ringförmige Auskragung (201), wenn das Luftfilterelement (30) in dem Gehäuse (10) lösbar eingebaut ist, radial hineinragt.

13. Luftfilterelement (30) nach einem der Ansprüche 9 - 10, wobei die Dichtung (33, 34) derart ausgestaltet ist, dass das Filterelement (30) an dem Gehäuseoberteil (11) und/oder dem Mittelrohr (20) durch Verrasten lösbar befestigbar ist, wobei insbesondere das Verrasten des Filterelements (30) dem Gehäuseoberteil (11) und/oder an dem Mittelrohr (20) beim lösbaren Einbau des Filterelements (30) haptisch wahrnehmbar ist.

14. Luftfilterelement (30) nach einem der Ansprüche 9 - 12, wobei die Dichtung (33; 34) einen Hinterschnitt (333; 341) in Form einer radial ringförmig umlaufenden Nut aufweist, welcher der Form einer Auskragung (201; 203) des Gehäuseoberteils (11) oder des Mittelrohrs (20) entspricht.

15. Verfahren zum Austausch eines Luftfilterelements (30, 31, 32) in einem Luftfiltersystem nach einem der Ansprüche 1 - 10, bei welchem das Gehäuse (10) geöffnet wird, insbesondere durch Lösen eines Gehäuseunterteils (13), anschließend ein Luftfilterelement (30, 31, 32) aus dem Gehäuse (10) entnommen wird und daran anschließend ein Luftfilterelement (30, 31, 32) nach einem der Ansprüche 11 - 14 in das Gehäuse (10) montiert wird, derart, dass die Dichtung (33, 34) mit der Dichtungsaufnahme (111) des Gehäuseoberteils (11) formschlüssig verbunden wird.
